# EUROPEAN PATENT APPLICATION

(11) **EP 1 713 208 A2**
(43) Date of publication of application: **18.10.2006**
(21) Application number: 06112664.5
(22) Date of filing: 13.04.2006
(51) Int. Cl.: H04L 12/28

(54) **Method and apparatus for transferring frames in extended wireless LAN**

(30) Priority: 15.04.2005 KR 20050031505
(71) Applicant: Samsung Electronics Co., Ltd., Suwon-si 442-742 Gyeonggi-Do (KR)
(72) Inventor: Kim, Min-soo, Seoul (KR); Cho, Song-yean, Dongjak-gu, Seoul (KR); Kong, Ji-young, Seoul (KR); Kim, Hyeong-seok, Bundang-gu, Gyeonggi-do (KR)
(74) Representative: Robinson, Ian Michael

(57) **Abstract**

A method and an apparatus to transfer a frame in an extended wireless local area network (LAN) environment into which wireless access points are introduced, the method including: grouping the wireless access points; receiving a frame; detecting destination address information from the frame; comparing the destination address information to address information of the wireless access points belonging to a group (A, B); and transmitting the frame to a wireless access point if the destination address information is identical to the address information of the wireless access points belonging to the group (A, B), to promote preventing a broadcast storm where a broadcast frame is repeatedly transmitted in a loop.

## Description

The present invention relates in general to a method and an apparatus to route frames in an extended wireless local area network (LAN) environment, and, more particularly, to a method and apparatus to form an effective transmission route, grouping wireless access points, and to prevent frames from being redundantly transmitted in an extended wireless LAN environment into which the wireless access points are introduced.

A repeater having wired and wireless interfaces is typically required to transfer data from a wired network to a mobile terminal connected to a wireless network. An access point (AP) defined by the Institute of Electrical and Electronics Engineers (IEEE) 802.11 standard generally plays the role of a repeater in a LAN.

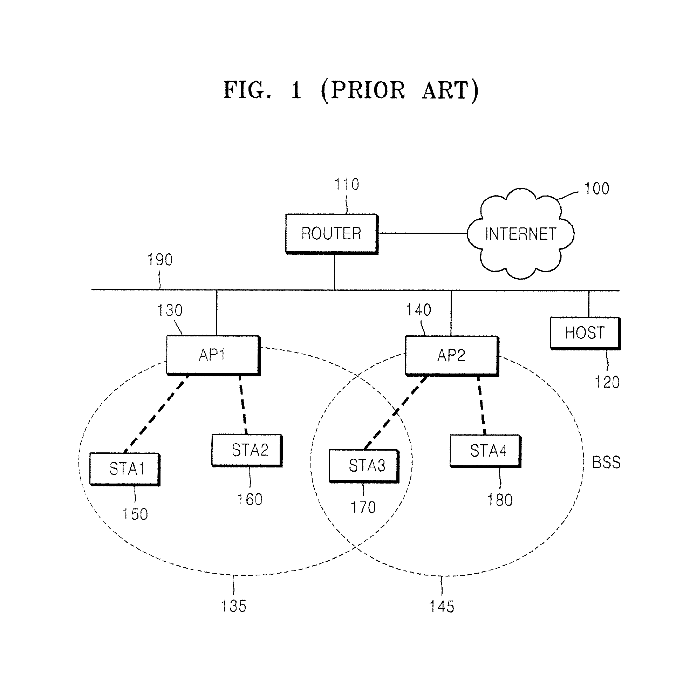

Figure 1 illustrates a LAN environment in accordance with the IEEE 802.11 standard. Referring to Figure 1, first and second access points (APs) (AP1, AP2) 130 and 140 are connected to the Internet 100 via a router 110, receive frames having a media access control (MAC) address, which is a link layer address, from the Internet 100 or a host 120 over a wired network, and forwards the frames to first through fourth stations (STA1, STA2, STA3, STA4) 150, 160, 170, and 180, which are mobile terminals belonging to basic service sets (BSSs) 135, 145, according to the MAC address. The coverage of a BSS is generally determined according to a radio wave that can reach an AP. A mobile station, for example, the third station (STA3) 170 in FIG. 1, can receive radio waves from two or more APs, since the coverage of two or more APs overlap. In this regard, all the stations can be linked to an AP and communicate the frames using a basic service set identifier (BSSID) in the IEEE 802.11 standard.

However, an extended wireless LAN, such as a wireless mesh network, in which a mobile node is separated from a wired network and can route frames is not specified. Mobile nodes can communicate the frames in the extended wireless LAN and form an ad hoc network. In this regard, where the frames are broadcasted, a broadcast storm in which the frames are repeatedly transmitted in a loop can occur. Such a repetition of the loop can be prevented by redesigning the topology, such as a spanning tree, but can ineffectively set a frame transfer route.

Further, similar to the LAN illustrated in Figure 1, where the frames are transmitted to a mobile node capable of communicating with two or more portals (transfer points intermediating the wired network and the wireless network) over the wired network in an extended wireless LAN, the AP to forward the frames has not been addressed in relation to providing an effective transmission route.

According to the present invention there is provided an apparatus and method as set forth in the appended claims. Preferred features of the invention will be apparent from the dependent claims, and the description which follows.

Several aspects and exemplary embodiments of the invention provide a method and an apparatus to group wireless access points, to set an effective transmission route, and to prevent frames from being redundantly transmitted in an extended wireless LAN environment.

According to an aspect of the invention, there is provided a method of routing a frame received over a wired network to a wireless network including mobile nodes (MNs) having a frame routing function, by a routing device to interconnect both the wired and wireless networks, the method including: detecting destination address information included in the frame; comparing the detected destination address information with address information of MNs belonging to a group which the routing device manages; and selectively transferring the frame to the MNs belonging to the group based on the address information comparison.

According to aspects of the invention, there is also provided a computer-readable storage medium having embodied thereon a computer program to execute by a processor a method of routing a frame received over a wired network to a wireless network including mobile nodes (MNs) having a frame routing function, by a routing device to interconnect both the wired and wireless networks, the method of routing the frame embodied in the program including: detecting destination address information included in the frame; comparing the detected destination address information with address information of MNs belonging to a group which the routing device manages; and selectively transferring the frame to the MNs belonging to the group based on the address information comparison.

Further, according to aspects of the invention, there is provided an apparatus to route a frame between a wireless network including mobile nodes (MNs) having a frame routing function and a wired network, the apparatus including: a comparator to compare address information of MNs belonging to a group which the apparatus manages with destination address information included in the frame received over the wired network; and a transmitter to selectively transfer the received frame to the MNs belonging to the group based on the address information comparison.

Also, according to aspects of the invention, there is provided a method of routing a broadcast frame in a wireless network, the method including: receiving at least one group identifier (GID), to determine a transfer range of a broadcast frame from an apparatus to relay the broadcast frame between the wireless network and a wired network, and selecting a GID of the received one or more group identifiers (GIDs); receiving the broadcast frame; detecting a GID included in the received broadcast frame and comparing the detected GID with the selected GID; and selectively transferring the broadcast frame based on the GID comparison.

According to aspects of the invention, there is also provided a computer-readable storage medium having embodied thereon a computer program to execute by a processor a method of routing a broadcast frame in a wireless network, the method of routing the broadcast frame embodied in the program including: receiving at least one group identifier (GID) to determine a transfer range of a broadcast frame from an apparatus to relay the broadcast frame between the wireless network and a wired network and selecting a GID of the received one or more GIDs; receiving the broadcast frame; detecting a GID included in the received broadcast frame and comparing the detected GID with the selected GID; and selectively transferring the broadcast frame based on the GID comparison.

Further, according to aspects of the invention, there is provided a method of routing a broadcast frame in a wireless network including mobile nodes (MNs) having a frame routing function, the method including: generating a group identifier (GID) to determine a transfer range of a broadcast frame and broadcasting the broadcast frame; receiving the broadcast frame; comparing a GID included in the received broadcast frame with the generated GID; and selectively transferring the broadcast frame based on the GID comparison.

Additionally, according to aspects of the invention, there is provided a computer-readable storage medium having embodied thereon a computer program to execute by a processor a method of routing a broadcast frame in a wireless network including mobile nodes (MNs) having a frame routing function, the method of routing the broadcast frame in the wireless network embodied in the program including: generating a group identifier (GID) to determine a transfer range of a broadcast frame and broadcasting the broadcast frame; receiving the broadcast frame; comparing a GID included in the received broadcast frame with the generated GID; and selectively transferring the broadcast frame based on the GID comparison.

Also, according to aspects of the invention, there is provided an apparatus to route a frame in a wireless network, the apparatus including: a receiver to receive at least one group identifier (GID) to determine a transfer range of a broadcast frame from an apparatus to relay the broadcast frame between the wireless network and a wired network; a selector to select a GID of the received one or more group identifiers (GIDs); a comparator to compare a GID included in the broadcast frame to the GID received by the receiver, if the broadcasting frame is received; and a transmitter to transfer the broadcast frame based on the GID comparison.

Additional aspects and/or advantages of the invention are set forth in the description which follows or are evident from the description, or can be learned by practice of the invention.

These and/or other aspects and advantages of the invention will become apparent and more readily appreciated from the following description of the embodiments, taken in conjunction with the accompanying drawings of which:
Figure 1 is a block diagram of a LAN environment defined by the IEEE 802.11 standard;
Figure 2 is a block diagram of an extended wireless LAN environment;
Figure 3 is a block diagram of two groups of mobile nodes (MNs) according to an embodiment of the invention;
Figure 4 is a block diagram of a repeater and an MN according to an embodiment of the invention;
Figure 5 is a flowchart of a method of forwarding a frame to a wireless network using a repeater according to an embodiment of the invention;
Figure 6 is a flowchart of a method of forwarding a broadcast frame using an MN according to an embodiment of the invention; and
Figures 7A and 7B are block diagrams illustrating changes in groups of MNs according to aspects of the invention.

Reference will now be made in detail to embodiments of the invention, examples of which are illustrated in the accompanying drawings, wherein like reference numerals refer to the like elements throughout. The embodiments are described below in order to explain aspects of the invention by referring to the figures, with well-known functions or constructions not necessarily being described in detail.

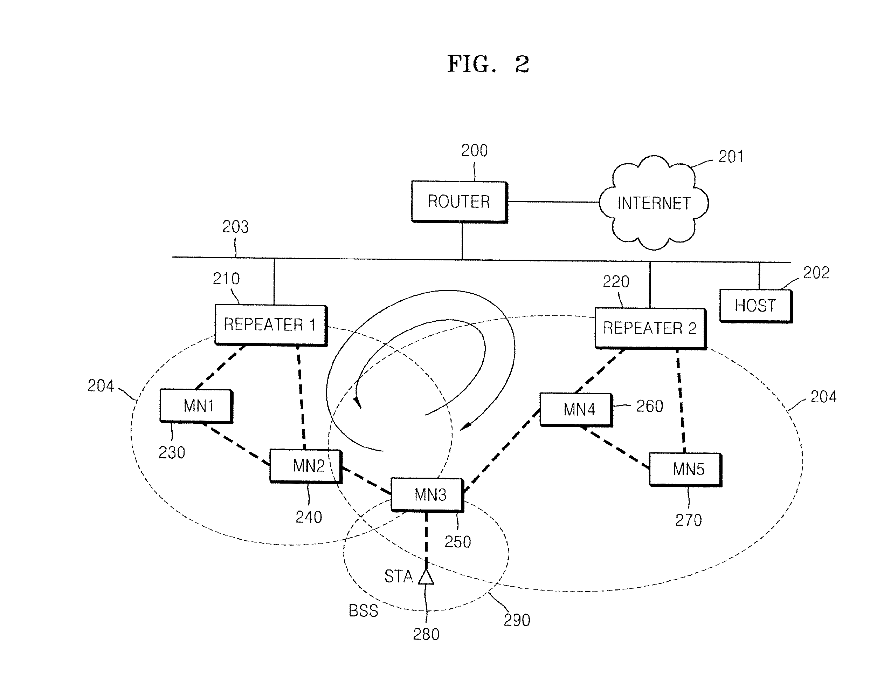

Figure 2 illustrates an extended wireless LAN environment. Referring to Figure 2, a wired network 203 is connected to the Internet 201 via a router 200. A first repeater 210, a second repeater 220 and a host 202 are connected to the wired network 203. The wired network 203 can generally use an Ethernet as a backbone network in a wireless LAN environment. The wired network 203 specifies a network including repeaters, and can be realized as a wireless network.

The first repeater 210 and the second repeater 220 repeat frames between the wired network 203 and the wireless network 204, and interface two different environments since the wired network 203 does not follow the IEEE 802.11 protocol in the wireless LAN environment. The first repeater 210 and the second repeater 220 are referred to as portals in the IEEE 802.11 protocol, and are generalized terms for the portals. A first mobile node (MN) 230 (MN1), a second MN 240 (MN2), a third MN 250 (MN3), a fourth MN 260 (MN4), and a fifth MN 270 (MN5) are introduced from the extended wireless LAN environment, and route the frames based on a MAC address, which is a data link layer address of an open systems interconnection (OSI) reference model, and can communicate with each other over the wireless network 204. The first MN 230 (MN1), the second MN 240 (MN2), the fourth MN 260 (MN4), and the fifth MN 270 (MN5) typically do not include a basic service set (BSS), and thus they are not referred to as wireless access points (APs). However, the third MN 250 (MN3) is an AP including a BSS 290 to which a station 280 belongs.

The frames transmitted from the router 200 or the host 202 and received by the first and second repeaters 210 and 220 are forwarded based on the MAC address. If a frame that is transmitted from the Internet 201 to the station 280 reaches the wired network 203, the first repeater 210 and the second repeater 220 can forward the frame to the first MN 230 (MN1), the second MN 240 (MN2), the third MN 250 (MN3), the fourth MN 260 (MN4), and the fifth MN 270 (MN5). The first MN 230 (MN1), the second MN 240 0 (MN2), the third MN 250 (MN3), the fourth MN 260 (MN4), and the fifth MN 270 (MN5) can form a wireless ad hoc network so that a transfer range is determined according to a topology structure, other than radio wave reach distances of the first repeater 210 and the second repeater 220, to generate various transfer routes. Since a frame of a link layer does not include a field to determine whether the frame is repeatedly transmitted, if the station 280 broadcasts the frame, a loop can be generated as indicated by the arrows in Figure 2.

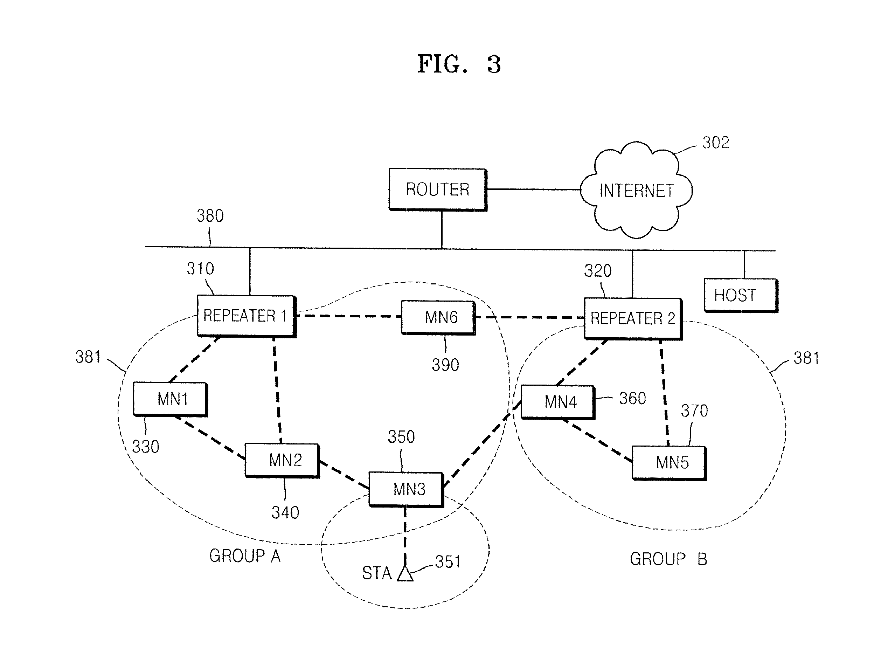

Figure 3 illustrates two groups A and B of MNs according to an embodiment of the invention. Referring to Figure 3, a first MN 330 (MN1), a second MN 340 (MN2), and a third MN 350 (MN3) belong to the group A managed by a first repeater 310, and a fourth MN 360 (MN4) and a fifth MN 370 (MN5) belong to the group B managed by a second repeater 320 in a wireless network 381. The first and second repeaters 310 and 320 store MAC addresses of mobile stations belonging to each of the groups A and B. Therefore, where a frame to be transmitted from the Internet 302 to a station 351 reaches a wired network 380, since a MAC address of a receipt address field of the frame is identical to, or corresponds to, a MAC address of a mobile station belonging to the group A, the first repeater 310 forwards the frame to the station 351. However, the second repeater 320 determines that a final receiver of the frame does not belong to the group B, and thus, does not forward the frame and disregards the frame.

Also, where a proxy address resolution protocol (ARP) is used, the first repeater 310 and the second repeater 320 do not store MAC addresses of all mobile stations, but store the MAC addresses of the MNs respectively belonging to the groups A and B. Where the first repeater 310 broadcasts an ARP frame, the third MN 350 (MN3) responds to the ARP frame instead of the station 351, and the first repeater 310 forwards the ARP frame to the third MN 350 (MN3). In this regard, each of the first MN 330 (MN1), the second MN 340 (MN2), the third MN 350 (MN3), the fourth MN 360 (MN4), and the fifth MN 370 (MN5) store MAC addresses of mobile stations respectively belonging to a BSS of the MN.

Where a mobile station belonging to a mobile node broadcasts a frame, and if each of the MNs stores a group ID that discriminates groups of the MNs, a broadcast storm typically does not occur. More specifically, if the station 351 belonging to the group A broadcasts the frame, the fourth MN 360 (MN4) belonging to the group B does not forward the frame transmitted by the third MN 350 (MN3) and disregards the frame, so that a repetitive transfer loop is typically not generated. In that the frame must include the group identifier (ID), a station or an MN must write the group ID to the frame. Further, since a sixth MN 390 (MN6) can be linked with the first repeater 310 and the second repeater 320, the first repeater 310 and the second repeater 320 must store the group ID. In this regard, the second repeater 320 forwards a broadcasted frame over the wired network 380 and disregards a broadcast frame received from the sixth MN 390 (MN6).

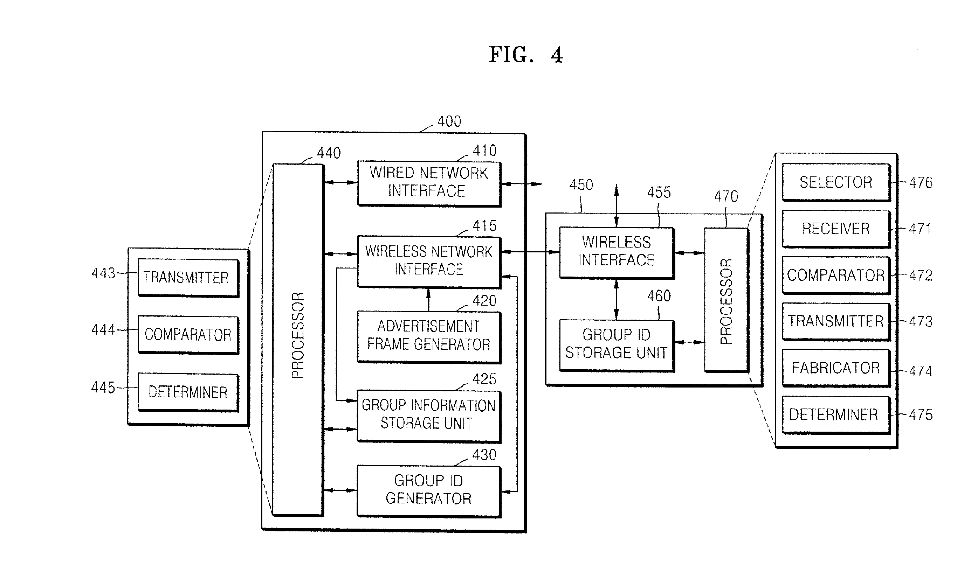

Figure 4 is a block diagram of a repeater 400 and an MN 450 according to an embodiment of the present invention. Referring to Figure 4, the repeater 400 includes a wired network interface 410, a wireless network interface 415, an advertisement frame generator 420, a group information storage unit 425, a group ID generator 430, and a processor 440. The MN 450 comprises a wireless interface 455, a group ID storage unit 460, and a processor 470. The wired network interface 410 is a protocol analysis member to communicate with a wired network. The wireless network interfaces 415 and 455 are protocol analysis members to communicate with a wireless network.

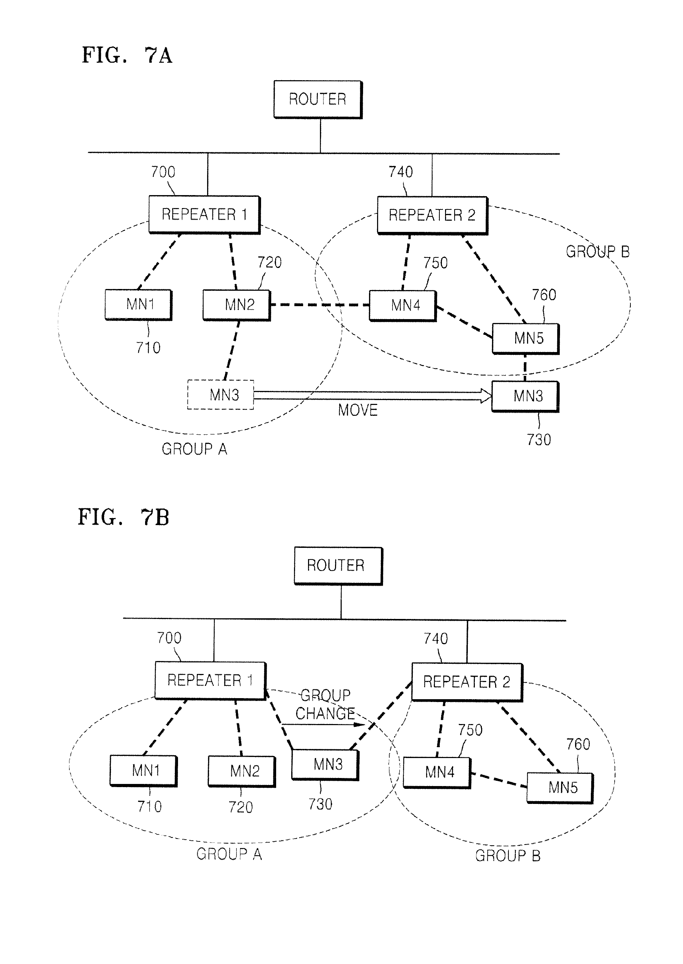

The advertisement frame generator 420 generates an advertisement frame including a MAC address of the repeater 400 and broadcasts the advertisement frame. If the MN 450 receives the advertisement frame, and the MN 450 determines to join a group including the repeater 400, and the MN 450 sends a response frame including a MAC address of the MN 450, the group information storage unit 425 stores the MAC address of the MN 450. Where the MN 450 receives the advertisement frame but does not send a response frame, the group information storing unit 425 can obtain the MAC address of the MN 450 that has joined the group. In this regard, the repeater 400 can obtain MAC addresses of MNs or mobile stations that join the group of the repeater 400 based on an orientation address information field of a data frame transmitted from the MNs or mobile stations. Also, in this regard, where an MN changes groups, the repeaters typically are informed of such a change of groups, such as further discussed with reference to Figure 7.

The group information storage unit 425 stores address information related to the MNs that have joined the group. The address information includes MAC addresses of stations. Also, if a proxy ARP is used, the address information includes MAC addresses of MNs, as described. The group ID generator 430 generates the group ID used to discriminate groups, stores the group ID in a database associated with the repeater 400, such as a suitable memory, and transmits the group ID of a group member, via the wireless network interface 415. However, the group ID can be included in the advertisement frame generated by the advertisement frame generator 420. Also, the group information storage unit 425, such as a suitable memory, can store the group ID.

The processor 440 includes a transmitter 443, a comparator 444, and a determiner 445. The processor 440 can be any suitable processing device, such as a processor, microprocessor or an application specific integrated circuit (ASIC), with associated memory and software or programming, to control the operations of the repeater 400. If the processor 440 receives a frame from the wired network via the wired network interface 410, the comparator 444 compares destination address information of the frame to the MAC address stored in the group information storage unit 425. Where the MAC address and the destination address information are identical to, or corresponds to, each other, the transmitter 443 forwards the frame to a mobile station. Where the MAC address and the destination address information are not identical to, or do not correspond to, each other, the frame is disregarded.

If a broadcast frame is received, the comparator 444 compares a group ID included in the broadcast frame with the group ID generated by the group ID generator 430. If the group IDs are identical, or correspond, to each other, the transmitter 443 forwards the broadcast frame. If the group IDs are not identical, or do not correspond, to each other, the broadcast frame is disregarded. However, broadcast frames transmitted over the wired network typically are forwarded without comparing both group IDs. In this regard, the determiner 445 determines whether the processor 440 receives the broadcast frame over the wired network or the wireless network.

The processor 470 of the MN 450 includes a receiver 471, a comparator 472, a selector 476, a transmitter 473, a fabricator 474, and a determiner 475. The processor 470 can be any suitable processing device, such as a processor, microprocessor or an application specific integrated circuit (ASIC), with associated memory and software or programming, to control the operations of the MN 450. The determiner 475 receives the advertisement frame from the repeater 400, determines whether to join the group including the repeater 400, and informs the transmitter 473 of its determination. The transmitter 473 transmits a response frame to the MAC address of the repeater 400 included in the advertisement frame.

The receiver 471 receives a group ID from the repeater 400 via the wireless network interface 455. The group ID storage unit 460 stores the group ID. If the receiver 471 receives two or more group IDs, the selector 476 selects one of the group IDs so that no MN typically should belong to two or more groups simultaneously. If the receiver 471 receives the broadcast fame via the wireless network interface 455, the comparator 472 compares a group ID included in the broadcast frame with the group ID of the group of the MN 450 stored in the group ID storage unit 460. If the group IDs are identical to, or correspond to, each other, the transmitter 473 forwards the broadcast frame. If the group IDs are not identical, or do not correspond, to each other, the broadcast frame is disregarded. Also, if the receiver 471 receives a broadcast frame that does not include a group ID, and the fabricator 474 determines that the broadcast frame is transmitted from a mobile station within the BSS managed by the MN 450, the fabricator 474 writes the group ID of the group of the MN 450 to the broadcast frame, and forwards the broadcast frame.

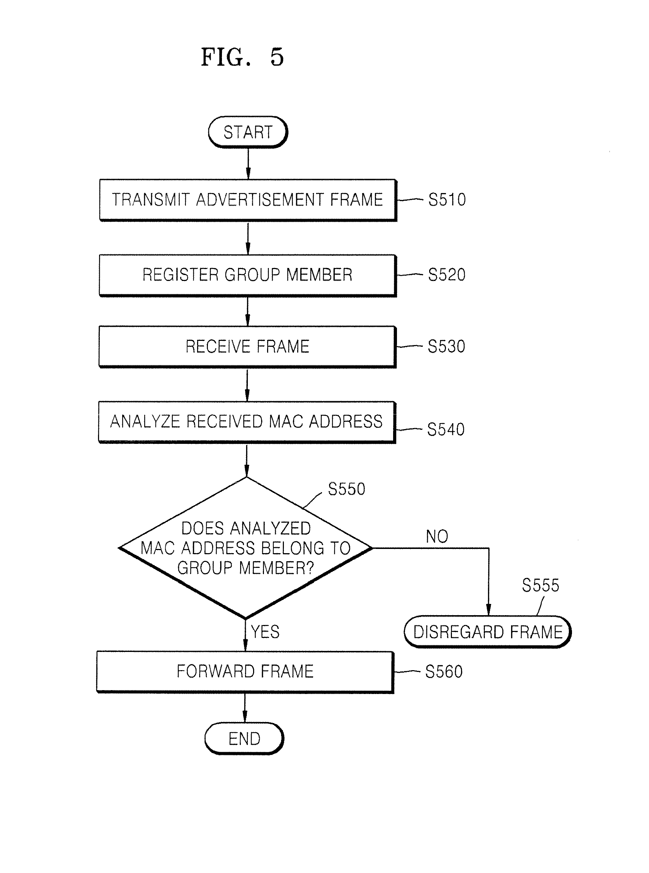

Figure 5 is a flowchart of a method of forwarding a frame to a wireless network using a repeater according to an embodiment of the invention. Referring to Figure 5, the repeater broadcasts an advertisement frame including a MAC address of the repeater to the MNs (Operation 510), receives the advertisement frame, stores a MAC address detected from the response frame or a data frame received from an MN that attempts to join a group, and registers the MN as a group member (Operation 520). The repeater receives a frame from a wireless network, which is a backbone network (Operation 530), extracts destination address information of the frame (Operation 540), and compares the extracted destination address information to a MAC address of the MN to determine whether the analyzed MAC address belongs to a group member (Operation 550). If the extracted destination address information and the MAC address of the MN are identical, or correspond, to each other, where the analyzed MAC address belongs to a group member, the repeater forwards the frame to the MN (Operation 560), otherwise the frame is disregarded (Operation 555).

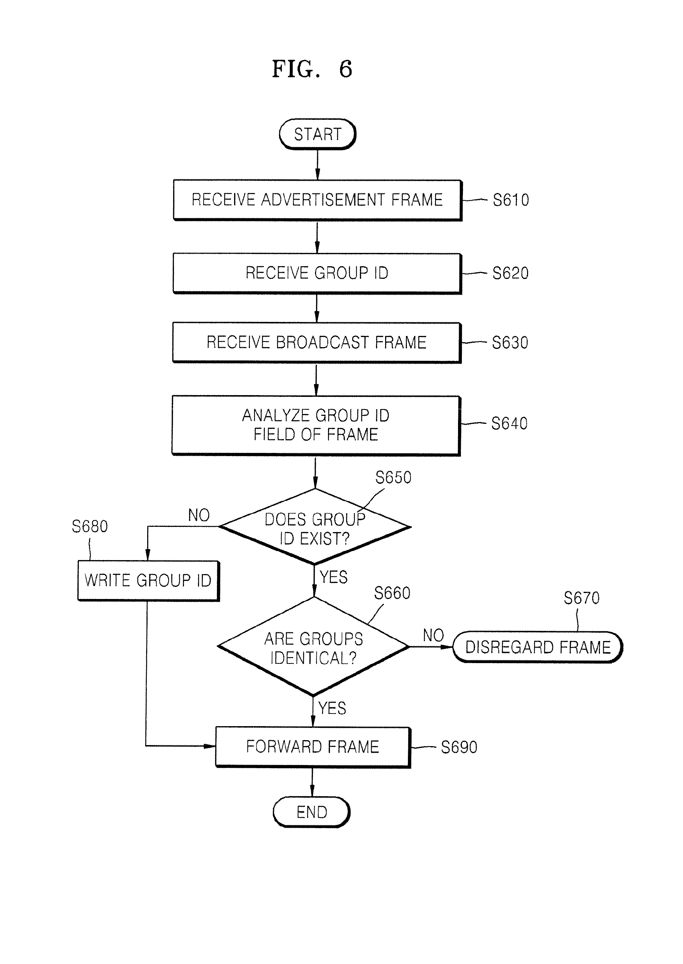

Figure 6 is a flowchart of a method of forwarding a broadcast frame using an MN according to an embodiment of the invention. Referring to Figure 6, the MN receives an advertisement frame including a MAC address of a repeater from the repeater (Operation 610), determines to join a group including the repeater, and transmits a response frame. The repeater stores a MAC address of the MN included in the response frame so that the MN is registered as a member of the group. The MN receives a group ID from the repeater (Operation 620). The group ID can be included in the advertisement frame. Where the MN does not transmit the response frame, the MN can be registered as a member of the group by transferring a data frame to the repeater. If the MN receives a plurality of group IDs from two or more repeaters, the MN selects one of the group IDs and is registered as a member of the selected group.

The MN receives the broadcast frame (Operation 630), extracts a group ID included in the broadcast frame and analyzes the extracted group ID (Operation 640), and determines whether a group ID exists (Operation 650). If no group ID exists, and the MN determines that a mobile station within a BSS managed by the MN has broadcasted the frame, the MN writes a group ID of the group of the MN to the broadcast frame (Operation 680), and forwards the broadcast frame (Operation 690). If a group ID exists, the MN compares the group ID of the group of the MN with the extracted group ID (Operation 660). If the group IDs are identical, or correspond, to each other, the MN forwards the broadcast frame (Operation 690). If the group IDs are not identical to, or do not correspond to, each other, the MN disregards the broadcast frame (Operation 670).

Figures 7A and 7B are block diagrams illustrating changes in groups of MNs according to an embodiment of the invention. Referring to Figure 7A, where the location of a third MN 730 (MN3) is changed as shown in Figure 7A, groups of the third MN 730 (MN3) are typically changed since the third MN 730 (MN3) that joins a group A communicates with only a fifth MN 760 (MN5). In this regard, if the group A of the third MN 730 is not changed to a group B, a frame broadcasted in the group A is no longer transmitted to the third MN 730 (MN3).

In this regard, if a fourth MN 750 (MN4) of the group B analyzes a group ID of the broadcast frame transmitted from a second MN 720 (MN2) and determines that the broadcast frame is not transmitted from the group B, the broadcast frame is not forwarded. The broadcast frame is forwarded via a second repeater 740 over a wired network. Finally, since the broadcast frame forwarded by the fifth MN 760 (MN5) includes a group ID of the group B, the third MN 730 (MN3) disregards the broadcast frame.

Therefore, the third MN 730 (MN3) transmits a broadcast frame to the second repeater 740 in order to join the group B. In this regard, a first repeater 700 deletes the third MN 730 (MN3) from a routing table, which is a MAC address information list of group members of the first repeater 700, and the second repeater 740 or the third MN 730 (MN3) informs the first repeater 700 of the group change.

Referring to Figure 7B, although the location of MNs is not changed, the group of the third MN 730 is changed. If a third MN 730 (MN3) that joins the group A including the first repeater 700 transmits a frame to the second repeater 740, the second repeater 740 stores a MAC address of the frame, and the third MN 730 (MN3) joins the group B so that the group of the third MN 730 (MN3) is changed. As described with reference to Figure 7A, the third MN 730 (MN3) or the second repeater 740 informs the first repeater 700 of the group change of the third MN 730 (MN3).

According to the aspects of the invention, a repeater groups MNs and manages the grouped MNs in an extended wireless LAN environment. Therefore, where an MN communicates with two or more repeaters directly or indirectly, a route is typically set such that a frame is received via a repeater, to promote reducing unnecessary network resources and preventing a broadcast storm where a broadcast frame is repeatedly transmitted along a loop.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of routing a frame in a wireless network (381), the method comprising:
detecting destination address information included in the frame;
comparing the detected destination address information with address information of mobile nodes (330-390) belonging to a group; and
selectively transferring the frame to the mobile nodes (330-390) belonging to the group based on the address information comparison.

2. The method of claim 1, further comprising:
grouping the mobile nodes (330-390) to manage communication of the mobile nodes (330-390) in the wireless network (381).

3. The method of claim 1 or 2, further comprising:
setting a route to communicate the frame in the wireless network (381) where a mobile node (390) communicates with a plurality of repeaters (310, 320) in the wireless network (381).

4. The method of any of claims 1, 2 or 3, for routing a frame received over a wired network (380) to a wireless network (381) including mobile nodes (330-390) including a frame routing function, by a routing device (310, 320) to interconnect the wired network (380) and the wireless network (381), wherein the method comprises comparing the detected destination address information with address information of mobile nodes (330-390) belonging to a group (A, B) managed by the routing device (310, 320).

5. The method of any of claims 1 to 4, wherein:
the address information of the mobile nodes (330-390) belonging to the group (A, B) is respectively received from each of the mobile nodes (330-390).

6. The method of any of claims 1 to 5, wherein:
the destination address information and the address information of the mobile nodes (330-390) comprise media access control MAC addresses.

7. The method of any of claims 1 to 6, wherein the comparing the detected destination address information with address information of mobile nodes (330-390) belonging to a group (A, B) comprises:
transferring the frame to a mobile node (350) corresponding to the detected destination address information, if the address information of the mobile nodes (330-390) belonging to the group (A, B) includes address information identical to the detected destination address information.

8. The method of any of claims 1 to 7, wherein the comparing the detected destination address information with address information of mobile nodes (330-390) belonging to a group (A, B) comprises:
disregarding the frame, if the address information of the mobile nodes (330-390) belonging to the group (A, B) does not include address information identical to the detected destination address information.

9. The method of any of claims 1 to 5, wherein the comparing the detected destination address information with address information of mobile nodes (330-390) belonging to a group (A, B) comprises:
transferring the frame to a mobile node (350) corresponding to the detected destination address information, if the address information of the mobile nodes (330-390) belonging to the group (A, B) includes address information corresponding to the detected destination address information; and
disregarding the frame, if the address information of the mobile nodes (330-390) belonging to the group (A, B) does not include address information corresponding to the detected destination address information.

10. The method of any of claims 1 to 9, wherein:
the address information of the mobile nodes (330-390) includes addresses of the mobile nodes (330-390) or addresses of mobile stations belonging to a wireless local area network managed by the mobile nodes (330-390).

11. A method of routing a broadcast frame in a wireless network (381), the method comprising:
receiving at least one group identifier (GID), to determine a transfer range of a broadcast frame, and selecting a group identifier (GID) of the received at least one group identifier (GID);
receiving the broadcast frame;
detecting a group identifier (GID) included in the received broadcast frame and comparing the detected group identifier (GID) with the selected group identifier (GID); and
selectively transferring the broadcast frame based on the group identifier (GID) comparison.

12. The method of claim 11, wherein the receiving step comprises receiving the at least one group identifier (GID) from an apparatus to relay the broadcast frame between the wireless network (381) and a wired network (380) .

13. The method of claim 11 or 12, wherein the selectively transferring the broadcast frame based on the group identifier (GID) comparison comprises:
writing the selected group identifier (GID) to the broadcast frame and transferring the broadcast frame, if the broadcast frame does not include a group identifier (GID).

14. The method of claim 11, 12 or 13, wherein the selectively transferring the broadcast frame based on the group identifier (GID) comparison comprises:
transferring the broadcast frame, if the group identifier (GID) included in the broadcast frame is identical to the selected group identifier (GID).

15. The method of any of claims 11 to 14, wherein the selectively transferring the broadcast frame based on the group identifier (GID) comparison comprises:
disregarding the broadcast frame, if the group identifier (GID) included in the broadcast frame is not identical to the selected group identifier (GID).

16. The method of any of claims 11 to 15, wherein the selectively transferring the broadcast frame based on the group identifier (GID) comparison comprises:
transferring the broadcast frame, if the group identifier (GID) included in the broadcast frame is identical to the selected group identifier (GID); and
disregarding the broadcast frame, if the group identifier (GID) included in the broadcast frame is not identical to the selected group identifier (GID).

17. The method of any of claims 11 to 16, wherein the selectively transferring the broadcast frame based on the group identifier (GID) comparison comprises:
transferring the broadcast frame, if the group identifier (GID) included in the broadcast frame corresponds to the selected group identifier (GID); and
disregarding the broadcast frame, if the group identifier (GID) included in the broadcast frame does not correspond to the selected group identifier (GID).

18. A method of routing a broadcast frame in a wireless network (381) including mobile nodes (330-390) including a frame routing function, the method comprising:
generating a group identifier (GID) to determine a transfer range of a broadcast frame and broadcasting the broadcast frame;
receiving a broadcast frame;
comparing a group identifier (GID) included in the received broadcast frame with the generated group identifier (GID); and
selectively transferring the broadcast frame based on the group identifier (GID) comparison.

19. The method of claim 18, wherein the selectively transferring the broadcast frame based on the group identifier (GID) comparison comprises:
transferring the broadcast frame, if the group identifier (GID) included in the broadcast frame is identical to the generated group identifier (GID).

20. The method of claim 18 or 19, wherein the selectively transferring the broadcast frame based on the group identifier (GID) comparison comprises:
disregarding the broadcast frame, if the group identifier (GID) included in the broadcast frame is not identical to the generated group identifier (GID).

21. The method of any of claims 18 to 20, wherein the selectively transferring the broadcast frame based on the group identifier (GID) comparison comprises:
transferring the broadcast frame, if the group identifier (GID) included in the broadcast frame is identical to the generated group identifier (GID); and
disregarding the broadcast frame, if the group identifier (GID) included in the broadcast frame is not identical to the generated group identifier (GID).

22. The method of any of claims 18 to 21, wherein the selectively transferring the broadcast frame based on the group identifier (GID) comparison comprises:
transferring the broadcast frame, if the group identifier (GID) included in the broadcast frame corresponds to the generated group identifier (GID); and
disregarding the broadcast frame, if the group identifier (GID) included in the broadcast frame does not correspond to the generated group identifier (GID).

23. A computer-readable storage medium having embodied thereon a computer program to execute by a processor the method as set forth in any of claims 1 to 22.

24. An apparatus (400) to route a frame between a wireless network (381) including mobile nodes (330-390) including a frame routing function and a wired network (380), the apparatus (400) comprising:
a comparator (444) to compare address information of mobile nodes (330-390) belonging to a group (A, B) managed by the apparatus (400) with destination address information included in the frame received over the wired network (380); and
a transmitter (443) to selectively transfer the received frame to the mobile nodes (330-390) belonging to the group (A, B) based on the address information comparison.

25. The apparatus (400) of claim 24, wherein:
the address information of the mobile nodes (330-390) includes addresses of the mobile nodes (330-390) or addresses of mobile stations (351) belonging to a wireless local area network (LAN) managed by the mobile nodes (330-390) .

26. The apparatus (400) of claim 24 or 25, further comprising:
a group identifier (GID) generator (430) to generate a group identifier (GID) to discriminate groups; and
a determiner (445) to determine a broadcast frame received over the wireless network (381),
wherein the comparator (444), where the determiner (445) determines that the broadcast frame is received over the wireless network (381), compares a group identifier (GID) included in the broadcast frame with the group identifier (GID) generated by the group identifier (GID) generator (430), and where the compared group identifiers (GIDs) are identical to each other, the transmitter (443) transfers the broadcast frame.

27. An apparatus (450) to route a frame in a wireless network (381), the apparatus (450) comprising:
a receiver (471) to receive at least one group identifier (GID) to determine a transfer range of a broadcast frame;
a selector (476) to select a group identifier (GID) of the received one or more group identifiers (GIDs);
a comparator (472) to compare a group identifier (GID) included in the broadcast frame to the selected group identifier (GID) received by the receiver (471), if the broadcast frame is received; and
a transmitter (473) to transfer the broadcast frame based on the group identifier (GID) comparison.

28. The apparatus (450) of claim 27 wherein the receiver (471) is arranged toto receive at least one group identifier (GID) to determine a transfer range of a broadcast frame from an apparatus (400) to relay the broadcast frame between the wireless network (381) and a wired network (380).

29. The apparatus (450) of claim 27 or 28, further comprising:
a processor (470) to write the group identifier (GID) selected by the selector (476) to the broadcast frame and to transfer the broadcast frame by the transmitter (473), if the received broadcast frame does not include a group identifier (GID).
